# EUROPÄISCHE PATENTSCHRIFT

(11) **EP 2 385 006 B1**
(45) Veröffentlichungstag und Bekanntmachung des Hinweises auf die Patenterteilung: **28.11.2012**
(21) Anmeldenummer: 11001718.3
(22) Anmeldetag: 02.03.2011
(51) Int. Cl.: B65G 65/48

(54) **Austragungsvorrichtung für kleinstückiges Schüttgut**
Discharge device for small sized bulk material
Dispositif de déchargement de produits en vrac de petite taille

(30) Priorität: 06.05.2010 DE 102010019799
(43) Veröffentlichungstag der Anmeldung: 09.11.2011
(73) Patentinhaber: Heizomat-Gerätebau + Energiesysteme GmbH, 91710 Gunzenhausen (DE)
(72) Erfinder: Bloos, Robert, 91710 Gunzenhausen (DE)
(74) Vertreter: Tergau, Dietrich

(56) Entgegenhaltungen:
- DE-A1- 3 200 727
- JP-A- 58 047 730

## Beschreibung

Die Erfindung betrifft eine Austragungsvorrichtung für kleinstückiges Schüttgut, insbesondere für einen festen Brennstoff, wie beispielsweise Hackschnitzel, umfassend ein um eine Antriebsachse drehbares Innenteil mit an seinen Enden über jeweils ein erstes Gelenk befestigten Gelenkarmen, die um eine Gelenkachse des ersten Gelenks gegen eine Federkraft in eine zusammengeklappte Position verstellbar sind.

Eine Austragungsvorrichtung an sich ist einerseits aus der DE 19 40 714 B2 und andererseits aus der DE 34 10 546 A1 bekannt. Die Austragungsvorrichtung dient zum Austragen von einem festen Brennstoff, wie z.B. Hackschnitzel, Holzbriketts oder Holzpellets aus einem Bunker zu einer Verbrennungsanlage (Heizkessel).

Bei der aus der DE 19 40 714 B2 bekannten Austragvorrichtung sind zwei Räumarme vorgesehen, welche mit Hilfe einer Gewindebüchse um die Mittellängsachse der Vorrichtung drehbar gelagert sind. Hierbei sind in die Gewindebüchse einschraubbare Regulierspindeln vorgesehen. Mit Hilfe der Regulierspindeln kann der radiale Abstand der Spitzen an den Freienden der Räumarme zur zentralen Drehachse verändert und eingestellt werden. Diese Einstellung dient der Regulierung der Austragsleistung der Räumarme. Die Räumarme sind über die Regulierspindeln und über Drehzapfen beim Austragvorgang starr mit der Gewindebüchse verbunden und laufen somit stets in einer konstanten Stellung um die Drehachse herum.

Die gattungsgemäße Austragungsvorrichtung gemäß der DE 34 10 546 A1 weist neben einer doppelarmigen Teleskopfräse üblicherweise noch eine Förderschnecke auf, mit deren Hilfe die Hackschnitzel aus dem Vorratsbunker hinaus transportiert werden. Da insbesondere Hackschnitzel zur Brückenbildung neigen, ist die doppelarmige Fräsanordnung vorgesehen, mit der die Hackschnitzel "umgerührt" werden. Dadurch gelangen Hackschnitzel zuverlässig zur Förderschnecke und eine kontinuierliche Brennstoffversorgung ist gesichert. Die Förderschnecke ist typischerweise unterhalb der Fräsanordnung vorgesehen und bildet mit dieser eine mechanisch fest miteinander verbundene Baueinheit.

Die Fräsanordnung umfasst ein um ihren Mittelpunkt um eine Antriebsachse, drehbares längliches Innenteil. Die beiden Gelenkarme sind an den Ende des Innenteils über jeweils ein erstes Gelenk befestigt. Die Gelenkarme werden durch eine Federkraft in einer aufgeklappten Position, in der sie insbesondere auf einer geraden Linie liegen, gehalten. Das Innenteil ist über einen Antriebsmotor antreibbar, so dass die Gelenkarme um die Antriebsachse rotieren. Die Gelenkarme klappen im Betrieb zumindest teilweise ein, wenn eine von den Hackschnitzeln erzeugte Gegenkraft die Federkraft übersteigt.

Ergänzend ist ein Druckteller oberhalb der Fräsanordnung angeordnet und überdeckt das Innenteil mit den ersten Gelenken. Die Fräsanordnung ist üblicherweise am Boden des Bunkers angeordnet, so dass die Hackschnitzel auf den Druckteller drücken. In der aufgeklappten Position erstrecken sich die Gelenkarme über den Rand des Drucktellers hinaus. In der eingeklappten Position der Gelenkarme sind diese Gelenkarme vorzugsweise vollständig unterhalb des Drucktellers angeordnet. Ein minimaler Räumdurchmesser wird bei eingeklappten und ein maximaler Räumdurchmesser bei vollständig ausgeklappten Gelenkarmen erreicht. Typische Werte für den Räumdurchmesser liegen minimal bei ca. 1 m und maximal bei ca. 7 m.

Im Betrieb tritt teilweise das Problem auf, dass das Abräumverhalten der Fräsanordnung nicht symmetrisch ist, was unter Umständen dazu führen kann, dass - obwohl noch ausreichend im Bunker vorhanden - die Hackschnitzel nicht mehr zuverlässig zur Förderschnecke befördert werden können.

Der Erfindung liegt die Aufgabe zugrunde, einen möglichst störungsfreien Betrieb einer solchen Austragungsvorrichtung zu gewährleisten.

Die Aufgabe wird erfindungsgemäß gelöst durch eine Austragungsvorrichtung für einen festen Brennstoff, insbesondere für Hackschnitzel, umfassend ein um eine Antriebsachse drehbares Innenteil mit an seinen Enden über ein Gelenk befestigten Gelenkarmen, die um eine Gelenkachse des Gelenks gegen eine Federkraft in eine zusammengeklappte Position verstellbar sind, wobei eine zwischen den Gelenkarmen wirksame Zwangskopplung zur Synchronisation der Schwenkbewegung der beiden Gelenkarme vorgesehen ist.

Die Erfindung geht von der Überlegung aus, dass eine symmetrische Verteilung der Hackschnitzel im Vorratsbunker und somit ein störungsfreier Betrieb der Austragungsvorrichtung gewährleistet ist, wenn die Bewegung der Gelenkarme zwischen der aufgeklappten und der zusammengeklappten Position synchronisiert ist. Dies wird erreicht durch eine vorzugsweise mechanische Zwangskopplung, die zwischen den Gelenkarmen wirksam ist. Unter Zwangskopplung wird allgemein eine Anzahl (ein oder mehrere) von Komponenten verstanden, über die eine Schwenkbewegung eines der beiden Gelenkarme auf den jeweils anderen Gelenkarm automatisch und zwangsweise übertragen wird. Die beiden Gelenkarme befinden sich daher zu jeder Zeit in der identischen ausgeklappten Position, beide definieren daher einen identischen Abräumradius. Dadurch ist ein regelmäßiges, symmetrisches und insbesondere kreisförmiges Räumverhalten sichergestellt und eine zuverlässige Versorgung der Förderschnecke mit dem festen Brennstoff gewährleistet. Die beiden Drehgelenke führen somit zeitglich die gleiche Bewegung aus, so dass die Gelenkarme synchronisiert aus der ausgeklappten Position in eine zumindest teilweise zusammengeklappte Position überführt werden und umgekehrt.

Bevorzugt handelt es sich bei den Komponenten der Zwangskopplung um mechanische Komponenten, die mechanische Kräfte oder Momente zwischen den Gelenkarmen übertragen. Diese Komponenten sind beispielsweise ein Gestänge, Seile, Bänder, Ketten, (ineinandergreifende) Zahnräder, etc. oder auch Kombinationen hiervon.

Der Gelenkarm ist vorzugsweise zweiteilig ausgebildet und umfasst einen Innenteil sowie einen Außenteil, die schwenkbar zueinander sind. Durch die zweiteilige Ausgestaltung des Gelenkarms kann dieser vollständig unterhalb des Drucktellers zusammengeklappt werden. Gleichzeitig erreicht er in der aufgeklappten Position eine Länge, die mehr als das Zweifache des Radius des Drucktellers beträgt. Dem Außenarm und dem Innenarm ist jeweils eine Feder zugeordnet, die die Arme unabhängig voneinander in die aufgeklappte Position drücken.

In bevorzugter Ausgestaltung greift die mechanische Zwangskopplung direkt an den jeweiligen Gelenken an. Eine Komponente der Zwangskopplung ist daher direkt mit jeweils einem Gelenkelement des jeweiligen Gelenks zur Einleitung einer Kraft oder eines Drehmoments insbesondere drehfest verbunden. Eine Drehbewegung des einen Gelenks wird daher zwangsweise auf das andere Gelenk übertragen. Diese Variante stellt eine direkte und konstruktiv besonders einfache Ankopplung der mechanischen Zwangskopplung dar.

Gemäß einer weiteren bevorzugten Ausgestaltung umfasst die mechanische Zwangskopplung zwei Drehelemente, die drehfest mit dem jeweiligen Gelenkarm verbunden sind, sowie ein Übertragungselement zur Übertragung einer Drehbewegung des einen Drehelements auf das andere Drehelement. Bei dieser Ausgestaltung werden die Gelenke jeweils durch ein Drehelement ergänzt, welches drehfest mit ihnen verbunden ist und das Übertragungselement aufnehmen kann. Das Übertragungselement ist zwischen den Drehelementen wirksam und überträgt die Drehbewegung vom einen Drehelement zum anderen Drehelement. Insbesondere ist das Übertragungselement derart ausgebildet, dass es selbst eine Drehbewegung ausführt, z.B. um die Antriebsachse. Die beiden Drehelemente sind hierbei identisch ausgestaltet, so dass die Rotation des Drehelements, die durch das Übertragungselement ausgelöst wurde, mit der gleichen Drehgeschwindigkeit erfolgt wie die des Drehelements, auf welches mittelbar über den Gelenkarm die externe Kraft wirkt.

Im Hinblick auf einen einfachen und effizienten Aufbau der mechanischen Zwangskopplung ist jedes der Drehelemente um eine Drehachse rotierbar, die parallel zur Gelenkachse ist und insbesondere mit der Gelenkachse zusammenfällt. Um dies zu erreichen ist das Drehelement insbesondere konzentrisch um die Drehachse angeordnet, indem es an einem Gelenkelement befestigt ist.

Gemäß einer bevorzugten Variante ist das Drehelement ein Zahnrad. Das im Wesentlichen kreisförmige Drehelement ist somit für eine konzentrische Anordnung um die Gelenkachse des Drehgelenks geeignet. Seine Zähne ermöglichen zudem eine sichere Verbindung zum Übertragungselement. Alternativ hierzu ist das Drehelement nach Art eines überstehenden Gelenkbolzens ausgebildet, an dem das Übertragungselement angreift.

Gemäß einer weiteren bevorzugten Variante ist das Übertragungselement ein flexibles, um die Drehelemente umlaufendes Element, insbesondere eine Kette. Alternativ ist es als ein Band oder ein Riemen oder ein Seil ausgebildet, das kraft- oder formschlüssig mit den Drehelementen verbunden ist.

Eine mechanische Zwangskopplung umfassend zwei Zahnräder und eine Kette hat sich als besonders geeignet und robust für den Einsatz in der Austragungsvorrichtung erwiesen, da eine sichere Verbindung zwischen den Zahnrädern und der Kette vorliegt. Diese Anordnung stellt außerdem eine Platz sparende Lösung dar, da sich die flexible Kette im Wesentlichen entlang des Innenteils erstreckt und ein relativ kleines Volumen aufweist.

Alternativ zur Kette ist gemäß einer weiteren bevorzugten Variante das Übertragungselement ein Zahnkranz, der mit den Zahnrädern zusammenwirkt. Ein fester Zahnkranz stellt eine mechanisch sehr stabile Lösung des Übertragungselements dar. Unter Zahnkranz wird vorliegend ein Ring mit Innenzahnung verstanden, auf der die Zahnräder abrollen. Der Zahnkranz ist ebenfalls wie die Gelenke unterhalb des Drucktellers angeordnet. Insbesondere weist der Zahnkranz Lagerelemente zum Abstützen und Abrollen auf dem Druckteller auf, wenn der Zahnkranz eine Drehbewegung eines der Gelenke auf das andere Gelenk überträgt und dabei um die Antriebsachse rotiert.

Gemäß einer bevorzugten Alternative zur Ausbildung der mechanischen Zwangskopplung ist dies nicht unmittelbar mit den ersten Gelenken verbunden ist, sondern wirkt indirekt auf diese. Bei einer solchen Anordnung ist die mechanische Zwangskopplung vorzugsweise ein Hebelarmgestänge mit einem Stellring und zwei Stellarmen, wobei die Stellarme schwenkbanam Stellring befestigt sind und beabstandet vom ersten Drehgelenk mit den Gelenkarmen drehfest verbunden sind. Der Stellring des Hebelarmgestänges weist bevorzugt einen Durchmesser auf, der im Wesentlichen der Länge des Innenteils entspricht. Dadurch wird gewährleistet, dass der Stellring ebenfalls vom Druckteller überdeckt ist und mit den Hackschnitzeln nicht in Kontakt kommt. Die Stellarme sind mit einem Ende schwenkbar am Stellring befestigt. Mit ihrem zweiten Ende sind die Stellarme ebenfalls drehbar mit den Gelenkarmen verbunden. Ein Zusammenklappen eines der Gelenkarme führt somit zwangsläufig zu einer Schwenkbewegung des entsprechenden Stellarms, die eine Drehung des Stellrings um die Antriebsachse nach sich zieht. Dies wiederum führt zu einer Schwenkbewegung des weiteren Stellarms, der vom Stellring mitgenommen wird. Damit wird ein Zusammenklappen des zweiten Gelenkarms bewirkt. Insbesondere weist der Stellring, ähnlich wie der oben beschriebene Zahnkranz, Lagerelemente auf, die seine Drehbewegung vereinfachen.

Vorzugsweise sind die Stellarme konvex gekrümmt. In der aufgeklappten Position der Gelenkarme liegt der Verbindungspunkt zwischen dem Stellarm und dem Stellring bevorzugt etwas seitlich vom Gelenkarm. Zwischen diesem Punkt und der Verbindungsstelle am Gelenkarm bildet der Stellarm daher einen Bogen nach außen. Dank der konvex gekrümmten Stellarme wird verhindert, dass die Stellarme bei der Einklappbewegung mit anderen Komponenten (Gelenkarme / Gelenke) kollidieren.

Ausführungsbeispiele der Erfindung werden anhand einer Zeichnung näher erläutert. Hierin zeigen:
- Fig. 1: in einer perspektivischen Darstellung eine Fräsanordnung für eine Austragungsvorrichtung,
- Fig. 2: eine vergrößerte Explosionsdarstellung des Ausschnitts I aus Fig. 1,
- Fig. 3: eine vergrößerte Explosionsdarstellung des Ausschnitts, II aus Fig. 1, und
- Fig. 4: eine alternative Ausführung einer Fräsanordnung für eine Austragungsvorrichtung.

Gleiche Bezugszeichen haben in den verschiedenen Figuren die gleiche Bedeutung.

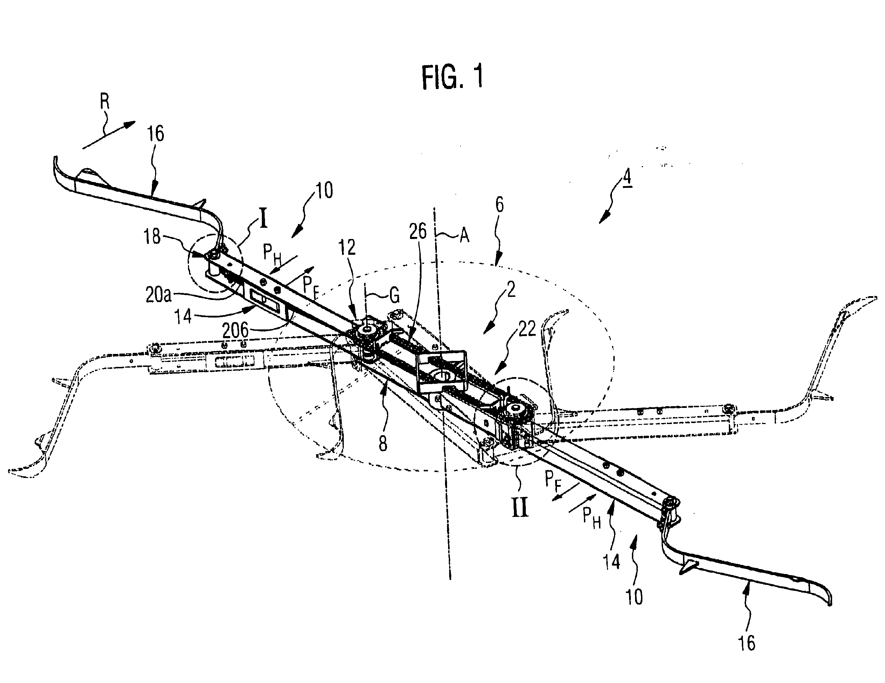

In Fig. 1 ist eine Fräsanordnung 2 einer Austragungsvorrichtung 4 für einen festen Brennstoff, wie z. B. Hackschnitzel, gezeigt. Die Austragungsvorrichtung 4 umfasst weiterhin einen Druckteller 6, der in Fig. 1 mit einer gestrichelten Linie gekennzeichnet ist. Die Austragungsvorrichtung 4 umfasst außerdem eine hier nicht näher gezeigte Förderschnecke zum Austragen der Hackschnitzel aus einem Vorratsbunker, in dem die Austragungsvorrichtung 4 angeordnet ist.

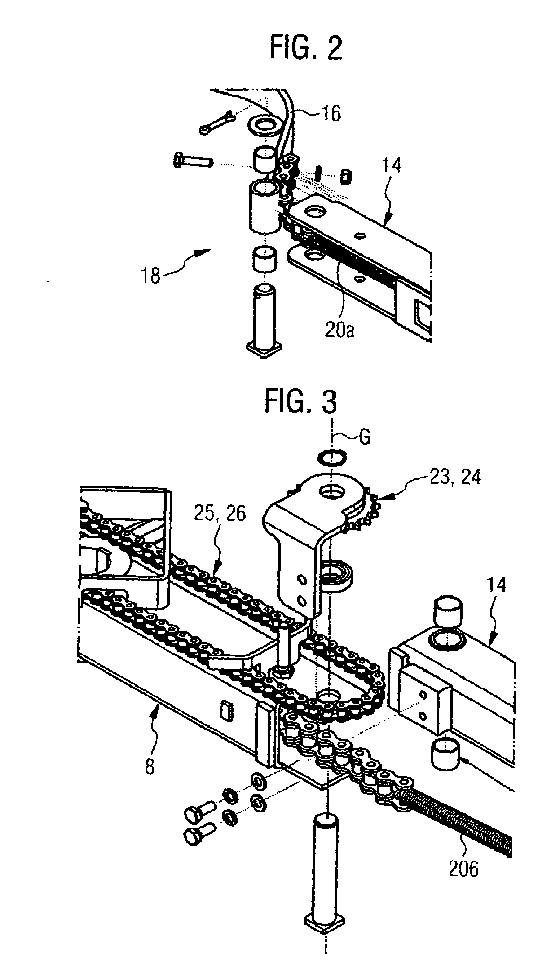

Die Fräsanordnung 2 ist symmetrisch um eine Antriebsachse A aufgebaut und um diese rotierbar gelagert. Die Fräsanordnung 2 umfasst ein längliches, drehbares Innenteil 8, das sich beidseitig der Antriebsachse A symmetrisch erstreckt und um diese rotiert. Zum Antrieb ist ein hier nicht näher dargestellter Motor, insbesondere Elektromotor vorgesehen. An den beiden Enden des Innenteils 8 ist ein zweiteiliger Gelenkarm 10 über jeweils ein Gelenk 12 mit dem Innenteil 8 verbunden. Die Gelenke 12 weisen jeweils eine Gelenkachse G auf, die sich parallel zur Antriebsachse A erstreckt. Der detaillierte Aufbau eines solchen Gelenks 12 ist in Fig. 3 gezeigt. Die zweiteiligen Gelenkarme 10 umfassen einen Innenarm 14 und einen Außenarm 16, die schwenkbar zueinander sind. Die Schwenkbewegung des Außenarms 16 bezüglich des Innenarms 14 erfolgt mit Hilfe eines weiteren Gelenks 18, dessen detaillierter Aufbau in Fig. 2 gezeigt ist.

Am Innenarm 14 sind zwei Zugfedern 20a, 20b vorgesehen, welche durch ihre Federkraft P_{F} die Gelenkarme 10 in einer aufgeklappten Position halten, die in Fig. 1 mit durchgezogenen Linien dargestellt ist. Die Zugfedern 20a üben auf den Außenarm 16 eine Zugkraft aus, die diesen in der gestreckten äußeren Position hält. Die Zugfedern 20b üben dagegen - unabhängig von den Zugfedern 20a - eine Federkraft auf den jeweiligen Innenarm 14 aus, die diese in der gestreckten Position hält. Die Fräsanordnung 2 rotiert in einer Rotationsrichtung R um die Antriebsachse A und nimmt nach Art eines Rührers Hackschnitzel mit, so dass diese zuverlässig in die Förderschnecke gelangen und ausgetragen werden. In der aufgeklappten Position liegen das Innenteil 8 und die Innenarme 14 auf einer Linie. Der Außenarm 16 ist S-förmig ausgebildet und wölbt sich mit seinem konkaven unteren Teil in Rotationsrichtung R der Fräsanordnung 2 aus. Der konvexe obere Teil des Außenarms 16 tangiert insbesondere die Linie der Innenarme 14 und des Innenteils 8.

Im Betrieb wird durch die Hackschnitzel eine Druckkraft P_{H} auf die Gelenkarme 10 ausgeübt. Ist diese größer als die entgegenwirkende Federkraft P_{F} klappen die Gelenkarme 10 entgegen der Rotationsrichtung R und gegen die Federkraft P_{F} zumindest teilweise ein. Die Einklappbewegung der Außenarme 16 ist dabei unabhängig von der Einklappbewegung der Innenarme 14.

In Fig. 1 sind zwei weitere Positionen der Fräsanordnung 2 mit gestrichelten Linien gezeigt, nämlich eine teilweise eingeklappte und eine weitgehend eingeklappte Position. In der teilweise eingeklappten Position befindet sich das Innenteil 8 sowie ein Teil der Innenarme 14 unterhalb des Drucktellers 6, der verhindert, dass Hackschnitzel in die Bewegungsmechanik der Austragungsvorrichtung 4 gelangen. Ein weiterer Teil der Innenarme 14 sowie die vollständigen Außenarme 16 reichen über den Rand des Drucktellers hinaus. In der weitgehend zusammengeklappten Position der Gelenkarme 10 befinden sich sowohl die Innenarme 14 als auch die Außenarme 16 vollständig unterhalb des Drucktellers 6.

Die Länge der Innenarme 14 sowie die der Außenarme 16 sind zumindest in etwa gleich und entsprechen annähernd der Länge des Innenteils 8. Im zusammengeklappten Zustand bilden das Innenteil 8, jeweils ein Innenarm 14 sowie ein Außenarm 16 in der Aufsicht ein Z-förmiges Element.

Die Austragungsvorrichtung 4 weist eine mechanische Zwangskopplung 22 auf, die auf die Gelenke 12 wirkt und eine Synchronisation der Gelenkarme 10, insbesondere der Innenarme 14, bei ihrem Zusammenklappen bewirkt. Die mechanische Zwangskopplung 22 weist zwei Drehelemente 23 auf, die in diesem Ausführungsbeispiel zwei Zahnräder 24 sind, wie aus Fig. 3 ersichtlich. Die mechanische Zwangskopplung 22 weist außerdem ein Übertragungselement 25 auf, welches in diesem Ausführungsbeispiel eine Kette 26 ist, die eine Drehbewegung eines der Zahnräder 24 auf das andere überträgt. Wie aus Fig. 3 ersichtlich, ist das Zahnrad 24 drehbar um die Gelenkachse G angeordnet. Dabei sind die Zahnräder 24 drehfest mit dem jeweiligen Innenarm 14 und somit mit dem Gelenkarm 10 verbunden. Hierzu ist das Zahnrad 24 über einen Flansch mit dem Innenarm 14 verbunden.

Alternativ zu einer Kette 26 kann als ein Übertragungselement 25 ein hier nicht näher gezeigter Zahnkranz eingesetzt werden, der mit den Zahnrädern 24 zusammenwirkt. Ein derartiger Zahnkranz hat eine ringförmige feste Struktur und weist einen Durchmesser auf, der insbesondere im Wesentlichen der Länge des Innenteils 8 entspricht. Die Zähne des Zahnkranzes sind insbesondere innenseitig um seinen Umfang angeordnet, so dass die Zahnräder bei ihrer Rotation auf dem Zahnkranz abrollen und eine Rotation des Zahnkranzes um die Antriebsachse herbeiführen.

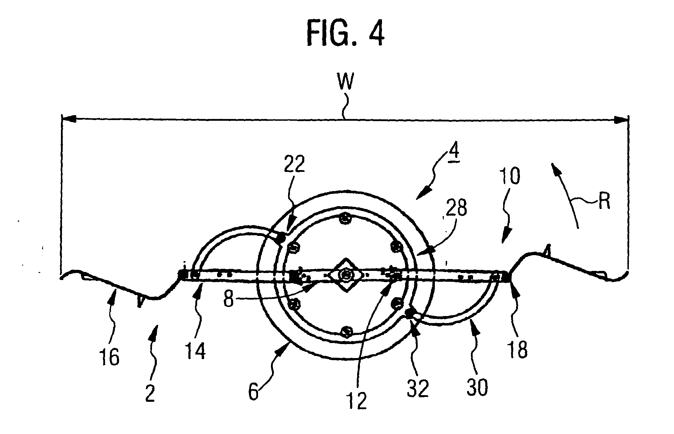

Ein weiteres Ausführungsbeispiel der Austragungsvorrichtung 4 ist in Fig. 4 gezeigt. Die mechanische Zwangskopplung 22 ist hierbei ein Hebelarmgestänge mit einem Stellring 28 und zwei Stellarmen 30. Die Stellarme 30 sind mit ihrem ersten Ende beabstandet vom Gelenk 12 an den Gelenkarmen 10 drehbar verbunden. Im gezeigten Ausführungsbeispiel sind die Stellarme 30 etwa im Bereich des weiteren Gelenks 18 mit dem Innenarm 14 der Gelenkarme 10 verbunden. Die Stellarme 30 weisen eine konvexe Form auf und sind mit ihrem zweiten Ende schwenkbar am Stellring 28 drehbar befestigt. Wenn die Gelenkarme 10 zusammengeklappt werden, drehen sich die Stellarme 30 um das Drehgelenk 32 entgegen der Rotationsrichtung R und werden ebenfalls wie die Gelenkarme 10 unterhalb des Drucktellers 6 zusammengeklappt.

Eine Spannweite W der Fräsanordnung 2 beträgt im Ausführungsbeispiel gemäß Fig. 4 etwa 4 m. Der Druckteller 6 weist hierbei einen Durchmesser auf, der etwas über 1 m ist. Diese Dimensionen sind auch auf das erste Ausführungsbeispiel gemäß Fig. 1 übertragbar.

Ein wesentlicher Vorteil der oben beschriebenen mechanischen Zwangskopplungen 22 für die Gelenkarme 10 ist, dass durch die synchronisierte Bewegung der Gelenkarme 10 eine sehr symmetrische Verteilung der Hackschnitzel vorliegt, so dass ein ungestörter Austrag des Brennstoffs erreicht ist.

Die Austragungsvorrichtung 4 wurde im Zusammenhang mit der Austragung von Holzschnitzeln beschrieben. Sie ist auch für andere kleinstückige Brennstoffe oder Schüttgüter verwendbar, wie beispielsweise (Kunststoff-)Granulat etc..

### Bezugszeichenliste

- 2: Fräsanordnung
- 4: Austragungsvorrichtung
- 6: Druckteller
- 8: Innenteil
- 10: Gelenkarm
- 12: Gelenk
- 14: Innenarm
- 16: Außenarm
- 18: weiteres Gelenk
- 20a,20b: Zugfedern
- 22: mechanische Zwangskupplung
- 23: Drehelement
- 24: Zahnrad
- 25: Übertragungselement
- 26: Kette
- 28: Stellring
- 30: Stellarm
- 32: Drehgelenk
- A: Antriebsachse
- G: Gelenkachse
- P_{F}: Federkraft
- P_{H}: Druckkraft der Hackschnitzel
- R: Rotationsrichtung d. Fräsanordnung
- W: Spannweite d. Fräsanordnung

## Patentansprüche

1. Austragungsvorrichtung (4) für kleinstückiges Schüttgut, insbesondere für Hackschnitzel, umfassend ein um eine Antriebsachse (A) drehbares Innenteil (8) mit an seinen Enden über jeweils ein Gelenk (12) befestigten Gelenkarmen (10), die um eine Gelenkachse (G) des Gelenks (12) gegen eine Federkraft (P_{F}) in eine zusammengeklappte Position verschwenkbar sind,
**dadurch gekennzeichnet,**
**dass** eine zwischen den beiden Gelenkarmen (10) wirksame Zwangskopplung (22) zur Synchronisation der Schwenkbewegung der Gelenkarme (10) vorgesehen ist.

2. Austragungsvorrichtung (4) nach Anspruch 1,
**dadurch gekennzeichnet**
**dass** die Gelenkarme (10) zweiteilig ausgebildet sind und einen Innenarm (14) sowie einen Außenarm (16) umfassen, die schwenkbar zueinander sind.

3. Austragungsvorrichtung (4) nach einem der vorhergehenden Ansprüche,
**dadurch gekennzeichnet,**
**dass** die Zwangskopplung (22) an den Gelenken (12) angreift und über diese insbesondere drehfest mit den Gelenkarmen (10) verbunden ist.

4. Austragungsvorrichtung (4) nach Anspruch 3,
**dadurch gekennzeichnet,**
**dass** die mechanische Zwangskopplung (22) zwei Drehelemente (23), die drehfest mit dem jeweiligen Gelenkarm (10) verbunden sind, sowie ein Übertragungselement (25) zur Übertragung einer Drehbewegung eines Drehelements (23) auf das andere Drehelement (23) umfasst.

5. Austragungsvorrichtung (4) nach Anspruch 4,
**dadurch gekennzeichnet,**
**dass** jedes der Drehelemente (23) um eine Drehachse rotierbar ist, die parallel zur Gelenkachse (G) ist und insbesondere mit der Gelenkachse (G) zusammenfällt.

6. Austragungsvorrichtung (4) nach Anspruch 4 oder 5,
**dadurch gekennzeichnet,**
**dass** das Drehelement (23) ein Zahnrad (24) ist.

7. Austragungsvorrichtung (4) einem der Ansprüche 4 bis 6,
**dadurch gekennzeichnet,**
**dass** das Übertragungselement (25) ein um die Drehelemente (23) umlaufendes flexibles Element, insbesondere eine Kette (26) ist.

8. Austragungsvorrichtung (4) nach einem der Ansprüche 4 bis 6,
**dadurch gekennzeichnet,**
**dass** das Übertragungselement (25) ein Zahnkranz ist.

9. Austragungsvorrichtung (4) nach einem der Ansprüche 1 oder 2,
**dadurch gekennzeichnet,**
**dass** die mechanische Zwangskopplung (22) ein Hebelarmgestänge mit einem Stellring (28) und zwei Stellarmen (30) ist, wobei die Stellarme (30) schwenkbar am Stellring (28) befestigt sind und beabstandet vom Gelenk (12) mit den Gelenkarmen (10) drehbar verbunden sind.

10. Austragungsvorrichtung (4) nach Anspruch 9,
**dadurch gekennzeichnet dass** die Stellarme (30) konvex gekrümmt sind.

## Claims

1. Discharge device (4) for small-sized bulk material, in particular for wood chips, comprising an inner section (8) rotatable around a drive shaft (A) having hinged arms (10) attached to its ends via a hinge (12) for each, said hinged arms (10) being able to be rotated around a hinge axis (G) of the hinge (12) against an elastic force (P_{F}) into a furled position,
**characterised in that**,
an active pressure coupling (22) is provided between the two hinged arms (10) for synchronising the rotational movement of the hinged arms (10).

2. Discharge device (4) according to claim 1,
**characterised in that**,
the hinged arms (10) are embodied in two parts and comprise an inner arm (14) and an outer arm (16), which are arranged rotatably to each other.

3. Discharge device (4) according to one of the preceding clams,
**characterised in that**,
the pressure coupling (22) is in contact with the hinges (12) and is linked via these to the hinged arms (10) specifically to prevent rotation.

4. Discharge device (4) according to claim 3,
**characterised in that**,
the mechanical pressure coupling (22) comprises two rotation elements (23), which are linked to the respective hinged arm (10) so as to prevent rotation, as well as a transfer element (25) for transferring a rotational movement of one rotation element (23) to the other rotation element (23).

5. Discharge device (4) according to claim 4,
**characterised in that**,
each of the rotation elements (23) is rotatable around an axis of rotation, which is parallel to the hinge axis (G) and, in particular, coincides with the hinge axis (G).

6. Discharge device (4) according to claim 4 or 5, **characterised in that**,
the rotation element (23) is a gear wheel (24).

7. Discharge device (4) according to one of claims 4 to 6, **characterised in that**,
the transfer element (25) is a rotating, flexible element around a rotation element (23), in particular a chain (26).

8. Discharge device (4) according to one of claims 4 to 6, **characterised in that**,
the transfer element (25) is a sprocket.

9. Discharge device (4) according to one of claims 1 or 2, **characterised in that**,
the mechanical pressure coupling (22) is a cantilever rod with a fixing collar (28) and two fixing arms (30), wherein the fixing arms (30) are attached rotatably to the fixing collar (28) and are linked rotatably to the hinged arms (10) at a distance from the hinge (12).

10. Discharge device (4) according to claim 9,
**characterised in that**,
the fixing arms (30) are curved convexly.

## Revendications

1. Dispositif de distribution (4) pour un produit composé de petits morceaux en vrac, en particulier pour des copeaux de bois, comprenant une pièce intérieure (8) rotative autour d'un axe d'entraînement (A), pourvue à ses extrémités de bras articulés (10) respectivement fixés au moyen d'une articulation (12), lesquels peuvent être pivotés autour d'un axe (G) de l'articulation (12) vers une position rabattue contre une force de ressort (P_{F}),
**caractérisé**
**en ce qu'**il est prévu un accouplement forcé (22) agissant entre les deux bras articulés (10) pour la synchronisation du pivotement des bras articulés (10).

2. Dispositif de distribution (4) selon la revendication 1,
**caractérisé**
**en ce que** les bras articulés (10) sont réalisés en deux parties et comprennent un bras intérieur (14) ainsi qu'un bras extérieur (16) qui peuvent pivoter l'un vers l'autre.

3. Dispositif de distribution (4) selon l'une des revendications précédentes,
**caractérisé**
**en ce que** l'accouplement forcé (22) a prise sur les articulations (12) et est relié par celles-ci aux bras articulés (10), notamment de manière solidaire en rotation.

4. Dispositif de distribution (4) selon la revendication 3,
**caractérisé**
**en ce que** l'accouplement mécanique forcé (22) comprend deux éléments rotatifs (23) reliés chacun de manière solidaire en rotation au bras articulé (10) respectif, ainsi qu'un élément de transmission (25) pour la transmission d'un mouvement de rotation d'un élément rotatif (23) à l'autre élément rotatif (23).

5. Dispositif de distribution (4) selon la revendication 4,
**caractérisé**
**en ce que** chaque élément rotatif (23) est rotatif autour d'un axe de rotation qui est parallèle à l'axe d'articulation (G), et qui coïncide en particulier avec l'axe d'articulation (G).

6. Dispositif de distribution (4) selon la revendication 4 ou 5,
**caractérisé**
**en ce que** l'élément rotatif (23) est une roue dentée (24).

7. Dispositif de distribution (4) selon l'une des revendications 4 à 6,
**caractérisé**
**en ce que** l'élément de transmission (25) est un élément flexible monté à la périphérie des éléments rotatifs (23), en particulier une chaîne (26).

8. Dispositif de distribution (4) selon l'une des revendications 4 à 6,
**caractérisé**
**en ce que** l'élément de transmission (25) est une couronne dentée.

9. Dispositif de distribution (4) selon la revendication 1 ou 2,
**caractérisé**
**en ce que** l'accouplement mécanique forcé (22) est une tringlerie à bras de levier avec une bague de réglage (28) et deux bras de réglage (30), lesdits bras de réglage (30) étant fixés de manière à pouvoir pivoter sur la bague de réglage (28) et étant reliés de manière solidaire en rotation aux bras articulés (10) à distance de l'articulation (12).

10. Dispositif de distribution (4) selon la revendication 9,
**caractérisé**
**en ce que** les bras de réglage (30) présentent une courbure convexe.
